# DEMANDE DE BREVET EUROPEEN

(11) **EP 4 817 958 A1**
(43) Date de publication de la demande: **07.10.2026**
(21) Numéro de dépôt: 26166972.5
(22) Date de dépôt: 24.03.2026
(51) Int. Cl.: B60R 9/06, B60R 9/10

(54) **PORTE-VÉLO POUR VÉHICLE ROUTIER**

(30) Priorité: 31.03.2025 FR 2503282
(71) Demandeur: Car&Bus Innov', 13430 Eyguières (FR)
(72) Inventeur: ROUVIERE, Jean, 13430 EYGUIERES (FR)
(74) Mandataire: Germain Maureau

(57) **Abrégé**

Porte-vélo (2) pour un véhicule routier, comme par exemple un bus de transport de passagers, comprenant une embase sur laquelle est montée pivotant un bras porteur (3) muni d'un organe d'accrochage pour accrocher une roue (90) d'un vélo (9), ledit bras porteur (3) étant mobile en pivotement entre une position abaissée et une position relevée, ledit porte-vélo (2) comprenant un moyen de retenue pour retenir le bras porteur (3) dans sa position relevée, ledit moyen de retenue comprenant un aimant (40) et un élément ferromagnétique fixés sur le bras porteur (3) et l'embase (20), ou inversement, afin que l'aimant (40) s'aimante réversiblement sur l'élément ferromagnétique lorsque le bras porteur (3) est dans sa position relevée. Avantageusement, un vérin d'assistance (5) est monté sur l'embase pour appliquer un effort d'assistance sur le bras porteur dans le sens d'un pivotement vers la position relevée.

## Description

### [Domaine technique]

L'invention se rapporte à un porte-vélo pour un véhicule routier, comme par exemple un bus de transport de passagers.

Elle se rapporte plus particulièrement à un porte-vélo comprenant un bras porteur qui peut être abaissé pour pouvoir accrocher dessus un vélo, et ensuite être relevé pour le transport du vélo à l'arrière du véhicule routier.

### [Etat de la technique]

Il est aujourd'hui connu de prévoir, sur l'arrière des bus de transport de passagers, des porte-vélos pour l'emport des vélos des usagers du bus, afin de faciliter l'intermodalité entre vélo et transport collectif. Il est même devenu obligatoire, en France, d'équiper avec des porte-vélos les bus neufs utilisés pour des services réguliers de transport public.

Pour répondre à ces enjeux, il est connu, notamment des documents EP0940330, EP0741071 et FR3132064, d'employer un porte-vélo comprenant un bras porteur mobile en pivotement entre une position abaissée (pour accrocher le vélo) et une position relevée (pour le transport).

Ces porte-vélo proposés présentent tous des mécanismes de verrouillage configurés pour verrouiller mécaniquement le bras porteur dans sa position relevée, afin que le bras porteur et le vélo ne se rabaissent pas durant le transport.

Le document EP0741071 propose un mécanisme de verrouillage comprenant une chaîne de traction, un pignon de chaîne, des roues à cliquet et un cliquet d'arrêt engrenant sur l'une des roues à cliquet.

Le document EP0940330 propose quant à lui de se servir d'un vérin à gaz qui maintient à l'horizontale une barre intermédiaire qui supporte, via un système à crochet, le bras porteur en position relevée.

Le document FR3132064 propose un mécanisme de verrouillage comprenant un second bras pivotant associé à un système de denture et de cliquet.

Tous ces mécanismes de verrouillage présentent des inconvénients, dont le principal est d'être complexes et de recourir à de nombreuses pièces, alourdissant ainsi le poids du porte-vélo, et augmentant son coût et son délai de fabrication.

L'état de la technique peut également être illustré par les enseignements du document JP4402672B2 qui décrit un support de vélo que l'on fixe sur un mur et qui permet de maintenir debout et au sol un vélo en engageant une roue dans une encoche formée sur un bras positionné à l'horizontale, ce bras pouvant être relevé à la verticale pour réduire l'encombrement lorsque le support de vélo n'est pas utilisé. Cependant, un tel support de vélo est inadapté pour former un porte-vélo pour un véhicule routier, car il ne permet pas de suspendre et porter un vélo lorsque le bras est relevé à la verticale, il permet seulement de maintenir debout et au sol un vélo en engageant sa roue avant dans son encoche.

### [Résumé de l'invention]

La présente invention a pour but de proposer un porte-vélo équipé d'une solution de verrouillage du bras porteur dans sa position relevée, qui soit simple et peu coûteuse à fabriquer.

A cette fin, l'invention propose un porte-vélo pour un véhicule routier, comme par exemple un bus de transport de passagers, comprenant une embase sur laquelle est montée pivotant un bras porteur muni d'un organe d'accrochage pour accrocher une roue d'un vélo, ledit bras porteur étant mobile en pivotement entre :
- une position abaissée dans laquelle l'organe d'accrochage est au plus bas pour pouvoir accrocher la roue du vélo sur l'organe d'accrochage ; et
- une position relevée dans laquelle l'organe d'accrochage est au plus haut pour permettre que le vélo soit décollé du sol et suspendu en l'air, accroché au niveau de sa roue sur l'organe d'accrochage (qui reste accessible).

Ce porte-vélo comprend un moyen de retenue pour retenir le bras porteur dans sa position relevée, et ce moyen de retenue comprenant un aimant et un élément ferromagnétique fixés ou intégrés respectivement sur le bras porteur et l'embase, ou inversement, afin que l'aimant s'aimante réversiblement sur l'élément ferromagnétique lorsque le bras porteur est dans sa position relevée.

Ainsi, l'invention propose de maintenir, et donc verrouiller, le bras porteur dans sa position relevée par aimantation, plutôt que par un verrouillage mécanique, ce qui constitue une solution à la fois économique et efficace.

Par ailleurs, cette solution par aimantation facilite son usage, car il suffit à l'utilisateur de lever le bras porteur qui, une fois en position relevée, s'aimante naturellement. L'utilisateur ressent même, à la fin de son mouvement de relevage, l'attraction magnétique et le plaquage de l'aimant sur l'élément ferromagnétique (généralement accompagné d'un bruit de plaquage), le rassurant sur le fait que le bras porteur est bien verrouillé dans sa position relevée. Aussi, l'utilisateur manipule de manière fluide le bras porteur lors de son relevage, sans sensation de pièces mécaniques qui engrènent ou qui se crochètent, ce qui est ergonomiquement avantageux.

L'élément ferromagnétique peut faire partie de l'embase (si celle-ci est réalisée au moins en partie dans un matériau ferromagnétique) ou du bras porteur (si celui-ci est réalisé au moins en partie dans un matériau ferromagnétique), ou bien l'élément ferromagnétique peut être rapporté fixement sur l'embase ou sur le bras porteur.

Selon une possibilité, le bras porteur présente une portion de terminaison proximale qui est montée pivotante sur l'embase, et une portion de terminaison distale qui prolonge la portion de terminaison proximale et qui se termine par une extrémité libre sur laquelle est fixé l'organe d'accrochage.

Avantageusement, la portion de terminaison proximale est rectiligne, et la portion de terminaison distale présente une section oblique dans le prolongement de la portion de terminaison proximale suivie d'une section rectiligne, parallèle mais non alignée avec la portion de terminaison proximale, et l'organe d'accrochage se positionne dans l'alignement avec la portion de terminaison proximale.

Cette conformation non linéaire du bras porteur est avantageuse, car elle permet de positionner la roue du vélo dans l'alignement de la portion de terminaison proximale, le long de la section rectiligne de la portion de terminaison proximale, ce qui favorise les transfert d'effort lors du relevage du bras porteur.

Selon une caractéristique, le porte-vélo comprend un vérin d'assistance monté sur l'embase et accouplé sur le bras porteur, ce vérin d'assistance étant configuré pour appliquer un effort d'assistance sur le bras porteur dans le sens d'un pivotement depuis la position abaissée vers la position relevée.

Un tel vérin d'assistance aide l'utilisateur à soulever le porte-vélo sur lequel est accroché le vélo, jusqu'à atteindre la position relevée qui sera à la fin verrouillée par aimantation.

Selon une possibilité, le vérin d'assistance présente un cylindre dans lequel coulisse une tige, et la tige et le cylindre sont montés pivotant sur l'embase et sur le bras porteur, ou inversement, de sorte que la tige est rétractée dans le cylindre dans la position abaissée du bras porteur et est déployée hors du cylindre dans la position relevée du bras porteur.

Selon une autre possibilité, le bras porteur comprend une portion formant bras de levier qui saille à angle droit, à plus ou moins 20 degrés, de la portion de terminaison proximale, et dans lequel la tige ou le cylindre du vérin d'assistance est monté pivotant sur cette portion formant bras de levier.

En articulant le cylindre ou la tige sur cette portion formant bras de levier, l'effort d'assistance est appliqué sur cette portion formant bras de levier, à distance de l'axe de pivotement de la portion de terminaison proximale, amplifiant ainsi l'effort qui soulève le bras porteur et le vélo.

Selon une autre possibilité, l'aimant ou l'élément ferromagnétique est fixé sur la portion de terminaison proximale.

Dans une réalisation particulière, l'aimant ou l'élément ferromagnétique est fixé sur la portion de terminaison proximale, à l'arrière de la portion formant bras de levier.

Ce positionnement est avantageux pour faciliter le décollement de l'aimant sur l'élément ferromagnétique, lorsque l'utilisateur tire sur le bras porteur pour l'abaisser depuis la position relevée en direction de la position abaissée.

Selon une caractéristique, l'embase comprend deux flasques entre lesquelles est articulé le bras porteur, et le vérin d'assistance est disposé entre les deux flasques.

Ainsi, le vérin d'assistance est protégé entre les deux flasques, en particulier contre d'éventuels chocs avec des vélos.

Dans une réalisation particulière, le porte-vélo comprend un repose-roue fixé sur l'embase et équipé d'une sangle inférieure pour pouvoir sangler une roue du vélo sur le repose-roue.

Ce repose-roue, qui peut avoir une forme de goulotte, peut être positionné sous le vérin d'assistance.

Dans un mode de réalisation particulier, le porte-vélo comprend un bras d'amarrage monté pivotant sur l'embase, adjacent au bras porteur et sur lequel est disposée au moins une sangle latérale, ce bras d'amarrage étant mobile en pivotement entre une position de repos dans laquelle le bras d'amarrage est rabattu contre l'embase, et une position d'amarrage dans laquelle le bras d'amarrage est relevé pour pouvoir sangler le vélo sur le bras d'amarrage au moyen de la sangle latérale lorsque le bras porteur est en position relevée.

Ainsi, une fois le bras porteur en position relevée avec le vélo accroché dessus, il suffit de relever ce bras d'amarrage (pour le placer sensiblement à l'horizontal) et ensuite de sangler le vélo sur ce bras d'amarrage au moyen de la sangle latérale que l'utilisateur va pouvoir passer et serrer autour du cadre du vélo et du bras d'amarrage.

Selon une variante, le bras d'amarrage est librement pivotant sur l'embase, sans verrouillage lorsqu'il est en position d'amarrage.

Autrement dit, lorsque le vélo n'est pas sanglé sur le bras d'amarrage, ce bras d'amarrage se rabat naturellement (sous l'effet de son propre poids) vers sa position de repos.

L'invention se rapporte également à une installation de porte-vélos pour un véhicule routier, comme par exemple un bus de transport de passagers, comprenant plusieurs portes-vélos tel que décrit précédemment et disposés côte-à-côte.

L'invention se rapporte également à un véhicule routier, de type bus de transport de passagers, à l'arrière duquel est fixée une installation de porte-vélos comme décrit ci-dessus, cette installation de porte-vélos comprenant un châssis qui est fixé sur le bus, les embases des plusieurs portes-vélos étant fixées sur ou formées par le châssis.

Avantageusement, le véhicule routier (ou bus) comprend une lunette arrière (sur l'arrière du bus) et le positionnement et les dimensions du châssis en hauteur sont tels que le châssis ne couvre pas la lunette arrière.

### [Brève description des figures]

D'autres caractéristiques et avantages de la présente invention apparaîtront à la lecture de la description détaillée ci-après, d'un exemple de mise en œuvre non limitatif, faite en référence aux figures annexées dans lesquelles :
La Figure 1 est une vue schématique de face d'une installation de porte-vélos comprenant plusieurs portes-vélos dont les bras porteurs sont tous en position abaissée ;
La Figure 2 est une vue schématique en perspective de l'installation de porte-vélos de la Figure 1, les bras porteurs étant tous en position abaissée et avec un vélo accroché sur le bras porteur de l'un des portes-vélos ;
La Figure 3 est une vue schématique de face et de côté de l'un des portes-vélos avec son bras porteur en position abaissée ;
La Figure 4 est une vue schématique de côté de de l'installation de porte-vélos de la Figure 1, les bras porteurs étant tous en position abaissée et avec un vélo accroché sur le bras porteur de l'un des portes-vélos ;
La Figure 5 est une vue schématique de face et de côté de l'un des portes-vélos avec son bras porteur en position intermédiaire, entre la position abaissée et la position relevée ;
La Figure 6 est une vue schématique en perspective de l'installation de porte-vélos de la Figure 1, les bras porteurs étant tous en position intermédiaire et avec un vélo accroché sur le bras porteur de l'un des portes-vélos ;
La Figure 7 est une vue schématique en perspective de l'installation de porte-vélos de la Figure 1, les bras porteurs étant tous en position relevée et avec un vélo accroché sur le bras porteur de l'un des portes-vélos ;
La Figure 8 est une vue schématique de côté de de l'installation de porte-vélos de la Figure 1, les bras porteurs étant tous en position relevée et avec un vélo accroché sur le bras porteur de l'un des portes-vélos ;
La Figure 9 est une vue schématique de face et de côté de l'un des portes-vélos avec son bras porteur en position relevée ;
La Figure 10 est une vue schématique en perspective et partielle de l'un des portes-vélos ayant son bras porteur en position relevée et sur lequel est accroché un vélo, avec un flasque retiré pour visualiser le vérin d'assistance et avec le bras d'amarrage en position d'amarrage, le vélo étant sanglé sur ce bras d'amarrage au moyen d'une sangle d'amarrage ; et
La Figure 11 est une vue schématique de côté et partielle de l'un des portes-vélos ayant son bras porteur en position relevée et sur lequel est accroché un vélo, avec un flasque retiré pour visualiser le vérin d'assistance.

### [Description détaillée d'un mode de réalisation de l'invention]

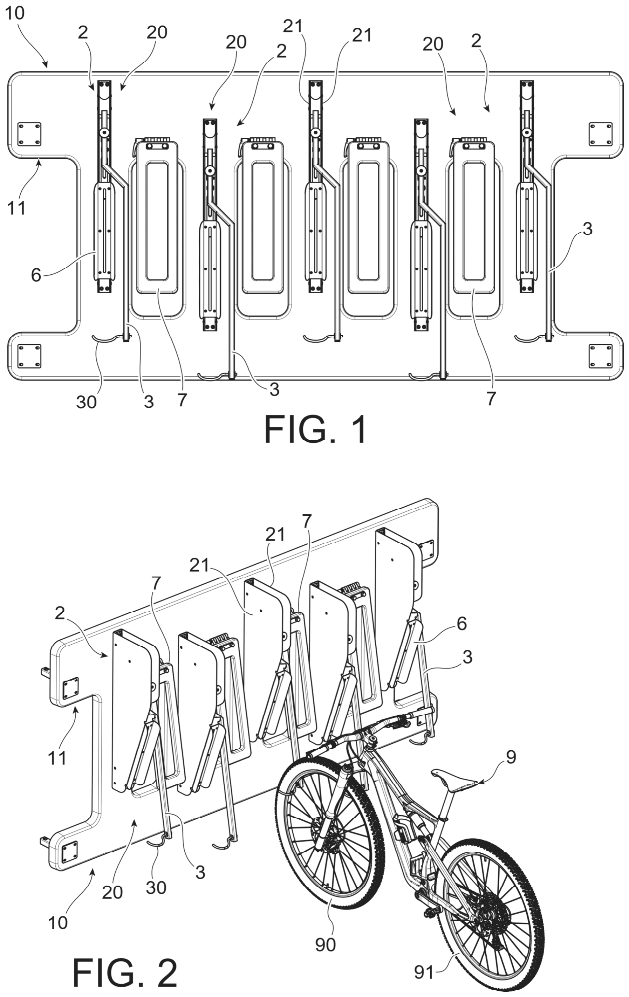

En référence aux Figures 1, 2, 6 et 7, une installation de porte-vélos 10 pour un véhicule routier, comme par exemple un bus de transport de passagers, comprend un châssis 11 sur lequel sont montés plusieurs portes-vélos 2.

Le châssis 11 est muni de moyens de fixation pour être fixé sur le véhicule routier, et en particulier à l'arrière du bus, comme par exemple des moyens par vissage, soudage, rivetage et boulonnage. Ce châssis 11 peut se présenter sous la forme d'une plaque.

Ce châssis 11 présente une conformation adaptée à différents modèles de bus, sans avoir besoin de rajouter des reports de feux. Pour ce faire, le châssis 11 présente des échancrures latérales, à droite et à gauche, qui sont disposées pour que les feux arrière du bus soient positionnés dans ces échancrures et soient donc visibles.

Les dimensions du châssis 11 en hauteur permettent également de ne pas couvrir la lunette arrière du bus.

Chaque porte-vélo 2 comprend une embase 20 sur laquelle est montée pivotant un bras porteur 3 muni d'un organe d'accrochage 30 pour accrocher une roue 90 (en l'occurrence une roue avant) d'un vélo 9.

Dans le mode de réalisation illustré, l'embase 20 est formée du châssis 11, ou du moins d'une partie du châssis 11, dans la mesure où tous les portes-vélos 2 sont montés sur ce châssis 11 qui est donc mis en commun pour tous les portes-vélos 2. Il est aussi envisageable que cette embase 20 soit un élément rapporté fixement sur le châssis 11.

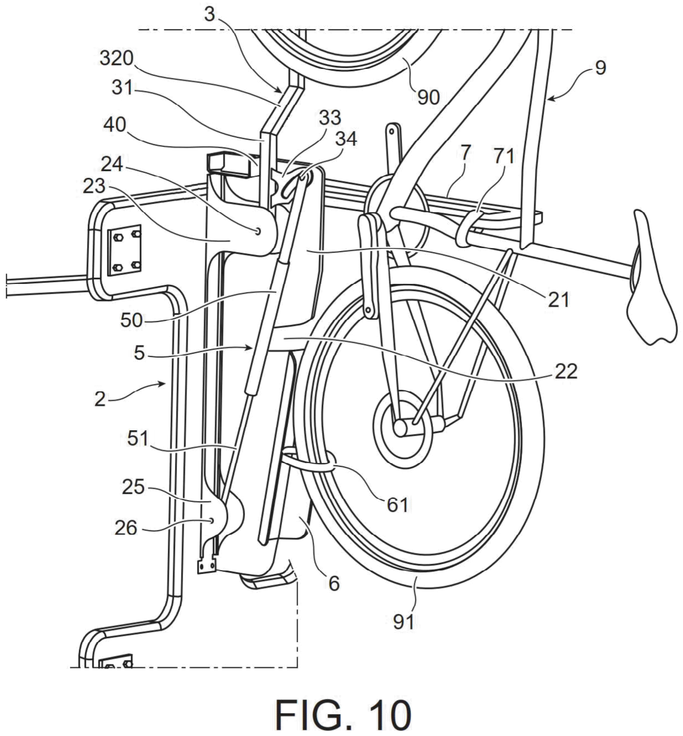

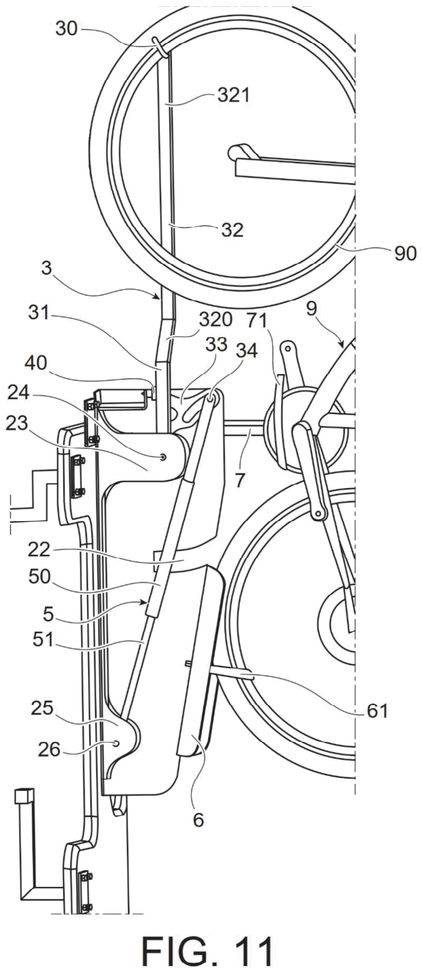

L'embase 20 comprend deux flasques 21 parallèles, d'extension verticale, et disposés l'un en face de l'autre pour délimiter une fente. Comme visible sur les Figures 10 et 11, l'embase 20 comprend un charnon supérieur 23 fixe, qui est disposé à l'intérieur de la fente entre les deux flasques 21, et qui porte une broche supérieure 24 qui sert d'axe de rotation pour le bras porteur 3. Cette broche supérieure 24 peut aussi être directement portée par les deux flasques 21.

Le bras porteur 3 comprend une portion de terminaison proximale 31 qui est montée pivotante sur l'embase 20, et plus précisément montée pivotante sur le charnon supérieur 23 autour de la broche supérieure 24.

Le bras porteur 3 comprend une portion de terminaison distale 32 qui prolonge la portion de terminaison proximale 31 et qui se termine par une extrémité libre sur laquelle est fixé l'organe d'accrochage 30.

La portion de terminaison proximale 31 est rectiligne, et la portion de terminaison distale 32 présente une section oblique 320 dans le prolongement de la portion de terminaison proximale 31 suivie d'une section rectiligne 321, parallèle mais non alignée avec la portion de terminaison proximale 31.

Par ailleurs, l'organe d'accrochage 30 se positionne dans l'alignement avec la portion de terminaison proximale 31. Cette forme permet ainsi de positionner la roue 90 du vélo 9 dans l'alignement de la portion de terminaison proximale 31, le long de la section rectiligne 321 de la portion de terminaison proximale 31, ce qui est avantageux pour les transfert d'effort lors du relevage du bras porteur 3.

Il est à noter que l'un des deux flasques 21 présente une encoche 22 pour permettre le passage de la section oblique 320 lorsque le bras porteur 3 est dans sa position abaissée.

Comme visible sur les Figures 10 et 11, le bras porteur 3 comprend une portion formant bras de levier 33 qui saille à angle droit, à plus ou moins 20 degrés, de la portion de terminaison proximale 31.

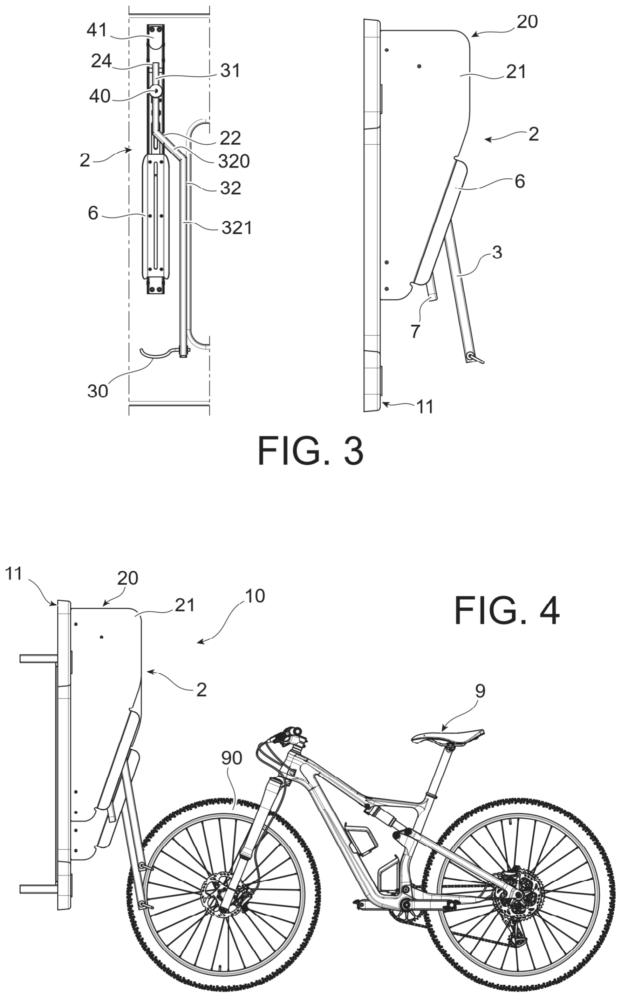

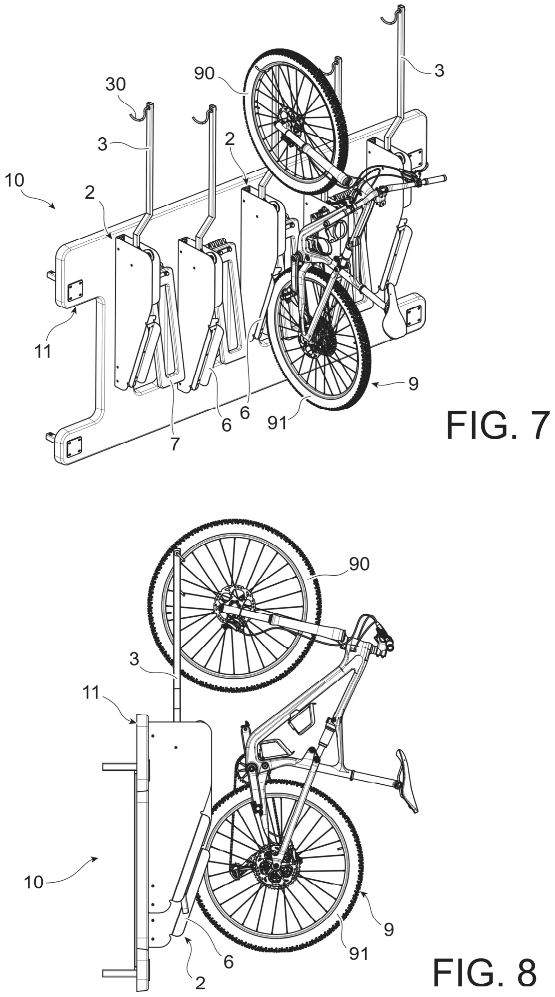

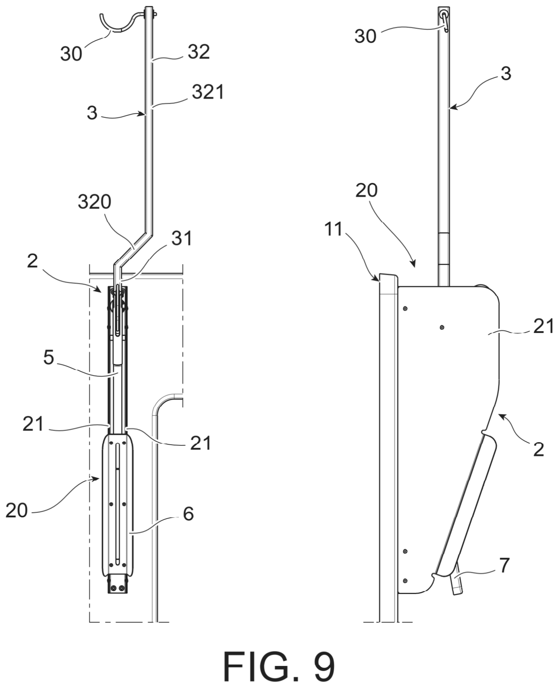

Le bras porteur 3 est donc monté pivotant sur le charnon supérieur 23 autour de la broche 24, entre :
- une position abaissée, visible sur les Figures 1 à 4, dans laquelle l'organe d'accrochage 30 est au plus bas afin de pouvoir accrocher la roue 90 du vélo 9 sur cet organe d'accrochage 30 (voir les Figures 2 et 4), le vélo 9 étant en appui sur le sol ; et
- une position relevée, visible sur les Figures 7 à 11, dans laquelle l'organe d'accrochage 30 est au plus haut de sorte que le vélo 9 a décollé du sol et est suspendu en l'air, accroché au niveau de sa roue 90 sur l'organe d'accrochage 30 (voir les Figures 7 et 8), l'organe d'accrochage 30 restant accessible pour le support de la roue 90 dans cette position relevée.

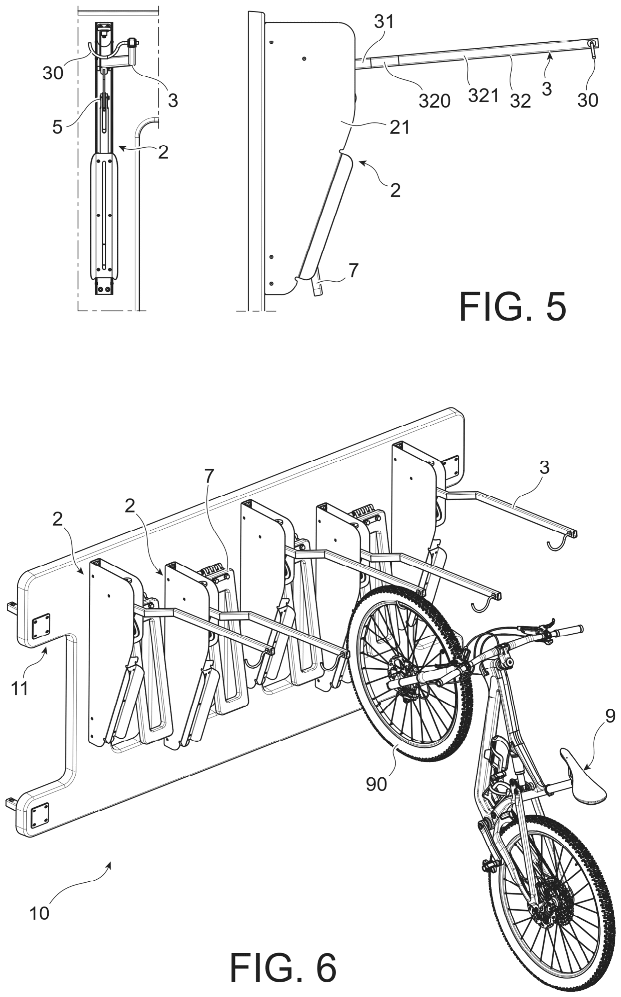

Les Figures 5 et 6 illustrent le bras porteur 3 dans une position intermédiaire sensiblement à l'horizontale, entre la position abaissée et la position relevée.

Chaque porte-vélo 2 comprend également un moyen de retenue pour retenir le bras porteur 3 dans sa position relevée, et ce moyen de retenue comprend un aimant 40 et un élément ferromagnétique 41 fixés sur le bras porteur 3 et l'embase 20, ou inversement, afin que l'aimant 40 s'aimante réversiblement sur l'élément ferromagnétique 41 lorsque le bras porteur 3 est dans sa position relevée.

L'aimant 40 (ou inversement l'élément ferromagnétique 41) est fixé sur le bras porteur 3, et plus particulièrement sur la portion de terminaison proximale 31, et l'élément ferromagnétique 41 (ou inversement l'aimant 40) est fixé entre les deux flasques 21, au-dessus du charnon supérieur 23.

Il est envisageable que le bras porteur 3 soit réalisé dans un matériau ferromagnétique et dans ce cas l'élément ferromagnétique 41 peut être une zone de ce bras porteur 3 sur laquelle s'aimante l'aimant 40 lorsque le bras porteur 3 est dans sa position relevée.

Il est aussi à noter que l'aimant 40 ou l'élément ferromagnétique 41 est fixé (ou positionné) sur la portion de terminaison proximale 31, à l'arrière de la portion formant bras de levier 33.

Comme visible sur les Figures 10 et 11, le porte-vélo 2 comprend également un vérin d'assistance 5 monté sur l'embase 20, en étant notamment disposé entre les deux flasques 21, et accouplé sur le bras porteur 3, pour appliquer un effort d'assistance sur le bras porteur 3 dans le sens d'un pivotement depuis la position abaissée vers la position relevée, autrement dit pour assister le relevage du bras porteur 3.

Ce vérin d'assistance 5 présente un cylindre 50 dans lequel coulisse une tige 51, de sorte que la tige 51 est rétractée dans le cylindre 50 dans la position abaissée du bras porteur 3 et est déployée hors du cylindre 50 dans la position relevée du bras porteur 3.

La tige 51 (ou inversement le cylindre 50) est montée pivotante sur l'embase 20, et le cylindre 50 (ou inversement la tige 51) est monté pivotant sur le bras porteur 3, et plus précisément sur la portion formant bras de levier 33 ; cette portion formant bras de levier 33 portant un axe de pivotement 34, parallèle à la broche supérieure 24, pour une articulation du cylindre 50 (ou inversement de la tige 51) autour de cet axe de pivotement 34.

Comme visible sur les Figures 10 et 11, l'embase 20 comprend un charnon inférieur 25 fixe, qui est disposé à l'intérieur de la fente entre les deux flasques 21, et qui porte une broche inférieure 26 qui sert d'axe de rotation pour la tige 51 (ou inversement le cylindre 50). Cette broche inférieure 26 peut aussi être directement portée par les deux flasques 21.

Chaque porte-vélo 2 comprend un repose-roue 6 en forme de goulotte, qui est fixé sur l'embase 20 et qui est équipé d'une sangle inférieure 61 pour pouvoir sangler une roue 91 (en l'occurrence une roue arrière) du vélo 9 sur le repose-roue 6. Ce repose-roue 6 est monté sur les flasques 21, en-dessous de la broche supérieure 24.

Chaque porte-vélo 2 comprend aussi un bras d'amarrage 7 monté pivotant sur l'embase 20, adjacent au bras porteur 3 et aux deux flasques 21, et sur lequel est disposée au moins une sangle latérale 71.

Dans l'installation de porte-vélos 10, chaque bras d'amarrage 7 est partagé pour deux porte-vélos 2, autrement dit chaque bras d'amarrage 7 est disposé entre deux bras porteur 3, afin de pouvoir sangler deux vélos 9 sur un même bras d'amarrage 7. Dans ce cas, chaque bras d'amarrage 7 est équipé d'au moins deux sangles latérales 71.

Le bras d'amarrage 7 est mobile en pivotement sur l'embase 20 (et plus largement sur le châssis 11) entre :
- une position de repos, visible sur les Figures 1, 2, 6 et 7, dans laquelle le bras d'amarrage 7 est rabattu (sensiblement à la verticale) contre l'embase 20 (ou contre le châssis 11) ; et
- une position d'amarrage, visible sur les Figures 10 et 11, dans laquelle le bras d'amarrage 7 est relevé (sensiblement à l'horizontale) pour pouvoir sangler le vélo 9 (ou deux vélos 9) sur le bras d'amarrage 7 au moyen de la sangle latérale 71 (ou de deux sangles latérales 71) lorsque le bras porteur 3 est en position relevée.

Ce bras d'amarrage 7 peut être librement pivotant sur l'embase 20, sans verrouillage lorsqu'il est en position d'amarrage, car il est maintenu en place avec la sangle latérale 71 serrée sur le vélo 9.

Dans une réalisation avantageuse, il est prévu un système à aimant pour maintenir par aimantation le bras d'amarrage 7 dans sa position de repos.

Ce système à aimant peut comprendre un aimant et un élément ferromagnétique fixés ou intégrés respectivement sur le bras d'amarrage 7 et l'embase 20, ou inversement, afin que l'aimant s'aimante réversiblement sur l'élément ferromagnétique lorsque le bras d'amarrage 7 est dans sa position de repos.

## Revendications

1. Porte-vélo (2) pour un véhicule routier, comme par exemple un bus de transport de passagers, comprenant une embase (20) sur laquelle est montée pivotant un bras porteur (3) muni d'un organe d'accrochage (30) pour accrocher une roue (90) d'un vélo (9), ledit bras porteur (3) étant mobile en pivotement entre :
- une position abaissée dans laquelle l'organe d'accrochage (30) est au plus bas pour pouvoir accrocher la roue (90) du vélo (9) sur l'organe d'accrochage (30) ; et
- une position relevée dans laquelle l'organe d'accrochage (30) est au plus haut pour permettre que le vélo (9) soit décollé du sol et suspendu en l'air, accroché au niveau de sa roue (90) sur l'organe d'accrochage (30),
ledit porte-vélo (2) comprenant un moyen de retenue pour retenir le bras porteur (3) dans sa position relevée,
ledit porte-vélo (2) étant **caractérisé en ce que** le moyen de retenue comprend un aimant (40) et un élément ferromagnétique (41) fixés ou intégrés respectivement sur le bras porteur (3) et l'embase (20), ou inversement, afin que l'aimant (40) s'aimante réversiblement sur l'élément ferromagnétique (41) lorsque le bras porteur (3) est dans sa position relevée.

2. Porte-vélo (2) selon l'une quelconque des revendications précédentes, dans lequel le bras porteur (3) présente une portion de terminaison proximale (31) qui est montée pivotante sur l'embase (20), et une portion de terminaison distale (32) qui prolonge la portion de terminaison proximale (31) et qui se termine par une extrémité libre sur laquelle est fixé l'organe d'accrochage (30).

3. Porte-vélo (2) selon la revendication 2, dans lequel la portion de terminaison proximale (31) est rectiligne, et la portion de terminaison distale (32) présente une section oblique (320) dans le prolongement de la portion de terminaison proximale (31) suivie d'une section rectiligne (321), parallèle mais non alignée avec la portion de terminaison proximale (31), et l'organe d'accrochage (30) se positionne dans l'alignement avec la portion de terminaison proximale (31).

4. Porte-vélo (2) selon l'une quelconque des revendications précédentes, comprenant un vérin d'assistance (5) monté sur l'embase (20) et accouplé sur le bras porteur (3), ledit vérin d'assistance (5) étant configuré pour appliquer un effort d'assistance sur le bras porteur (3) dans le sens d'un pivotement depuis la position abaissée vers la position relevée.

5. Porte-vélo (2) selon la revendication 4, dans lequel le vérin d'assistance (5) présente un cylindre (50) dans lequel coulisse une tige (51), et la tige (51) et le cylindre (50) sont montés pivotant sur l'embase (20) et sur le bras porteur (3), ou inversement, de sorte que la tige (51) est rétractée dans le cylindre (50) dans la position abaissée du bras porteur (3) et est déployée hors du cylindre (50) dans la position relevée du bras porteur (3).

6. Porte-vélo (2) selon les revendications 2 et 4, dans lequel le bras porteur (3) comprend une portion formant bras de levier (33) qui saille à angle droit, à plus ou moins 20 degrés, de la portion de terminaison proximale (31), et dans lequel la tige (51) ou le cylindre (50) du vérin d'assistance (5) est monté pivotant sur cette portion formant bras de levier (33).

7. Porte-vélo (2) selon la revendication 6, dans lequel l'aimant (40) ou l'élément ferromagnétique (41) est fixé sur la portion de terminaison proximale (31).

8. Porte-vélo (2) selon la revendication 7, dans lequel l'aimant (40) ou l'élément ferromagnétique (41) est fixé sur la portion de terminaison proximale (31), à l'arrière de la portion formant bras de levier (33).

9. Porte-vélo (2) selon l'une quelconque des revendications 4 à 8, dans lequel l'embase (20) comprend deux flasques (21) entre lesquelles est articulé le bras porteur (3), et le vérin d'assistance (5) est disposé entre les deux flasques (21).

10. Porte-vélo (2) selon l'une quelconque des revendications précédentes, comprenant un repose-roue (6) fixé sur l'embase (20) et équipé d'une sangle inférieure (61) pour pouvoir sangler une roue (91) du vélo (9) sur le repose-roue (6).

11. Porte-vélo (2) selon l'une quelconque des revendications précédentes, comprenant un bras d'amarrage (7) monté pivotant sur l'embase (20), adjacent au bras porteur (3) et sur lequel est disposée au moins une sangle latérale (71), ce bras d'amarrage (7) étant mobile en pivotement entre une position de repos dans laquelle le bras d'amarrage (7) est rabattu contre l'embase (20), et une position d'amarrage dans laquelle le bras d'amarrage (7) est relevé pour pouvoir sangler le vélo (9) sur le bras d'amarrage (7) au moyen de la sangle latérale (71) lorsque le bras porteur (3) est en position relevée.

12. Porte-vélo (2) selon la revendication 11, dans lequel le bras d'amarrage (7) est librement pivotant sur l'embase (20), sans verrouillage lorsqu'il est en position d'amarrage.

13. Installation de porte-vélos (10) pour un véhicule routier, comme par exemple un bus de transport de passagers, comprenant plusieurs portes-vélos (2) selon l'une quelconque des revendications précédentes et disposés côte-à-côte.

14. Véhicule routier, de type bus de transport de passagers, à l'arrière duquel est fixée une installation de porte-vélos (10) selon la revendication 13, ladite installation de porte-vélos (10) comprenant un châssis (11) qui est fixé sur le bus, les embases (20) des plusieurs portes-vélos (2) étant fixées sur ou formées par le châssis (11).

15. Véhicule routier selon la revendication 14, comprenant une lunette arrière et dans lequel le positionnement et les dimensions du châssis (11) en hauteur sont tels que le châssis (11) ne couvre pas la lunette arrière.
